# EUROPEAN PATENT SPECIFICATION

(11) **EP 2 469 853 B1**
(45) Date of publication and mention of the grant of the patent: **10.08.2016**
(21) Application number: 10815004.6
(22) Date of filing: 09.09.2010
(51) Int. Cl.: H04N 7/15, H04N 7/14

(54) **METHOD AND DEVICE FOR PROCESSING VIDEO IMAGE DATA, SYSTEM AND TERMINAL FOR VIDEO CONFERENCE**
VERFAHREN UND VORRICHTUNG ZUR VERARBEITUNG VON VIDEOBILDDATEN SOWIE SYSTEM UND ENDGERÄT FÜR VIDEOKONFERENZEN
PROCÉDÉ ET DISPOSITIF DE TRAITEMENT DE DONNÉES D'IMAGE VIDÉO, SYSTÈME ET TERMINAL DE VISIOCONFÉRENCE

(30) Priority: 10.09.2009 CN 200910161963
(43) Date of publication of application: 27.06.2012
(73) Proprietor: Huawei Device Co., Ltd., Shenzhen, Guangdong 518129 (CN)
(72) Inventor: WEI, Xiaoxia, Shenzhen Guangdong 518129 (CN); ZHAO, Song, Shenzhen Guangdong 518129 (CN); WANG, Jing, Shenzhen Guangdong 518129 (CN); LIU, Yuan, Shenzhen Guangdong 518129 (CN); LI, Kai, Shenzhen Guangdong 518129 (CN)
(74) Representative: Epping - Hermann - Fischer
(86) International application number: PCT/CN2010/076763
(87) International publication number: WO 2011/029402

(56) References cited:
- EP-A1- 0 906 695
- EP-A1- 1 677 534
- CN-A- 1 427 618
- CN-A- 1 738 403
- CN-A- 101 146 231
- CN-A- 101 668 160
- US-A1- 2002 135 682
- US-A1- 2008 192 109

## Description

This application claims priority to Chinese Patent Application No. 200910161963.9, filed with the Chinese Patent Office on September 10, 2009 and entitled "method and device apparatus for processing video image data and videoconferencing system and videoconferencing terminal".

### FIELD OF THE INVENTION

The present invention relates to the field of communications, and in particular, to a method and an apparatus for processing video image data, a videoconferencing system and a videoconferencing terminal.

### BACKGROUND OF THE INVENTION

With development of coding and information compression technologies and rapid development of digital networks, a videoconferencing system emerges and accesses to the market. Since the first series of international standards about the videoconferencing system (H.320) were granted and implemented in the beginning of the 1990s, the videoconferencing system has been applied more and more widely. Meanwhile, demands for voice experience and video experience that are provided by the videoconferencing system are closely concerned. The voice experience is required to evolve towards high-fidelity voice recurrence, and the video experience is required to evolve towards a high resolution and broad viewing angle.

In an existing videoconferencing television system, a videoconferencing terminal at a transmitting end captures an image by using a single high definition camera, where resolutions of captured high definition videos are generally 720p30f, 720p60f, 1080i30f, 1080i60f, 1080p30f, and 1080p60f, and then the captured videos are compressed and coded to generate a video code stream; then, through a data transmission network, the video code stream is transmitted to a videoconferencing terminal at a receiving end; and the videoconferencing terminal at the receiving end decodes the received video code stream to obtain a high definition video image However, a viewing angle of a provided video image is limited.

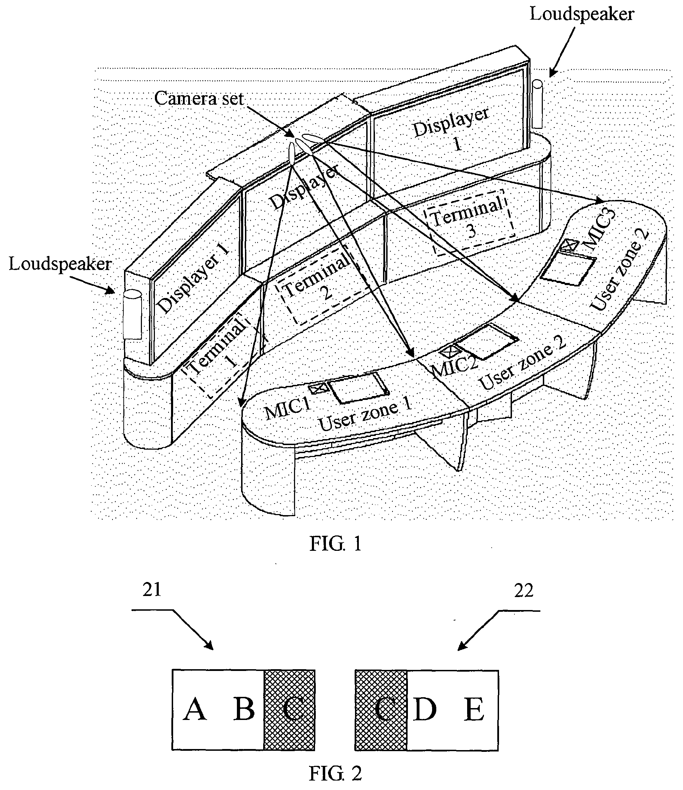

The Cisco TelePresence System solves the forgoing problem to some extent. As shown in FIG. 1, a structure of the system includes multiple video terminals, each video terminal is equipped with a high definition camera, and multiple cameras are placed strictly at physical positions, so that when collected multiple channels of video images are displayed on multiple display devices in the same horizontal plane, the viewer can get a consecutive feeling.

The prior art has the following disadvantages: This solution has a strict demand on the decoration and layout of a conference room, especially on a position of a camera set and a distance between a user and the camera set; otherwise, an overlapping phenomenon may occur on an image that is displayed on a display device, and this strict demand results in complex installation of the system.

EP 1677534 A1 relates to a method for minimizing problems with dead zones associated with panoramic cameras are described. A dead zone is an area about a zero degree boundary where a three hundred and sixty degree panoramic image is split so that a two-dimensional panorama can be rendered. Redirection of the zero degree boundary to a position where no object appears is described that prevents an object located in the dead zone from being split between margins of the panorama. Another technique involves reproducing one or more portions of the image that appears at one margin adjacent to an opposite margin so that an object in the dead zone that would normally be split is reproduced in whole. The described techniques may be implemented in a panoramic camera endpoint device or in a client device remote from a camera. The techniques may be applied to live video or to previously recorded video.

US 2002-0135682 A1 relates to an image pickup processes of a plurality of image pickup apparatuses are synchronized by using one kind of communication medium (for example, IEEE1394-1995 standard or its extended standard). A control device selects a master camera from the plurality of image pickup apparatuses. The master camera generates a time stamp for synchronizing frame synchronization signals of all of the image pickup apparatuses (including the master camera). All of the image pickup apparatuses (including the master camera) generate the frame synchronization signals on the basis of the time stamp generated by the master camera and generate image data on the basis of the generated frame synchronization signals.

US 2008/0192109 A1 discloses an assembly for carrying out a video conference between a location A and at least one location W, during which it is possible for at least some participants to make eye-to-eye contact or face-to-face contact by using multi-channel reproduction with filters.

### SUMMARY OF THE INVENTION

In view of the forgoing description, embodiments of the present invention provide a method and an apparatus for processing video image data, a videoconferencing system and a

videoconferencing terminal, to solve a problem that installation of a system is complex in the prior art.

Embodiments of the present invention provide a method, an apparatus, and a system for controlling a conference including a telepresence conference site of claims 1, 4 and 5, respectively.

Further embodiments of the present invention are defined in the dependent claims.

It can be seen from the forgoing technical solutions that, compared with the prior art, in the embodiments of the present invention, after the multiple channels of video image data collected by the multiple cameras are obtained, the multiple channels of video image data are processed into the single channel of panoramic video image data, and the single channel of panoramic video image data is recombined into several channels of video image data according to a display requirement for display. In this process, an operation of processing the multiple channels of video image data into the single channel of panoramic video image data may eliminate an overlapping situation existing between each channel of video image data. Therefore, the overlapping situation existing between each channel of video image data collected by the camera is allowed, so that requirements on a position where a camera set is placed and a distance between a user and the camera set are lowered, and installation complexity of the system is simplified.

### BRIEF DESCRIPTION OF THE DRAWINGS

The accompanying drawings described herein are used to provide for further understanding of the present invention, which are a part of this application, but are not intended to limit the present invention. In the accompanying drawings:
FIG. 1 is a schematic structural diagram of a videoconferencing system in the prior art;
FIG. 2 is a schematic diagram of correlative video images according to an embodiment of the present invention;
FIG. 3 is a schematic diagram of combining correlative video images according to an embodiment of the present invention;
FIG. 4 is a flow chart of a method for processing video image data according to an embodiment of the present invention;
FIG 5a and FIG. 5b are schematic diagrams of recombining video image data in a method for processing video image data according to an embodiment of the present invention;
FIG. 6 is a schematic diagram of a video image data sending process in a method for processing video image data according to an embodiment of the present invention;
FIG. 7 is a schematic diagram of a video image data receiving process in a method for processing video image data according to an embodiment of the present invention;
FIG. 8 is a schematic structural diagram of an apparatus for processing video image data according to an embodiment of the present invention;
FIG. 9 is another schematic sturctural diagram of an apparatus for processing video image data according to an embodiment of the present invention;
FIG. 10 is another schematic structural diagram of an apparatus for processing video image data according to an embodiment of the present invention;
FIG. 11 is another schematic structural diagram of an apparatus for processing video image data according to an embodiment of the present invention;
FIG. 12 is a schematic structural diagram of a videoconferencing system according to an embodiment of the present invention;
FIG. 13 is another schematic structural diagram of a videoconferencing system according to an embodiment of the present invention;
FIG. 14 is another schematic structural diagram of a videoconferencing system according to an embodiment of the present invention;
FIG. 15 is a schematic structural diagram of a videoconferencing terminal according to an embodiment of the present invention;
FIG. 16 is another schematic structural diagram of a videoconferencing terminal according to an embodiment of the present invention;
FIG. 17 is another schematic structural diagram of a videoconferencing terminal according to an embodiment of the present invention; and
FIG. 18 is another schematic structural diagram of a videoconferencing terminal according to an embodiment of the present invention.

### DETAILED DESCRIPTION OF THE EMBODIMENTS

In order to make the objectives, technical solutions, and advantages of the present invention more comprehensible, the present invention is described in further detail in the following with reference to the embodiments and the accompanying drawings. Here, the exemplary embodiments of the present invention and descriptions of the embodiments are only used to explain the present invention, but are not intended to limit the present invention.

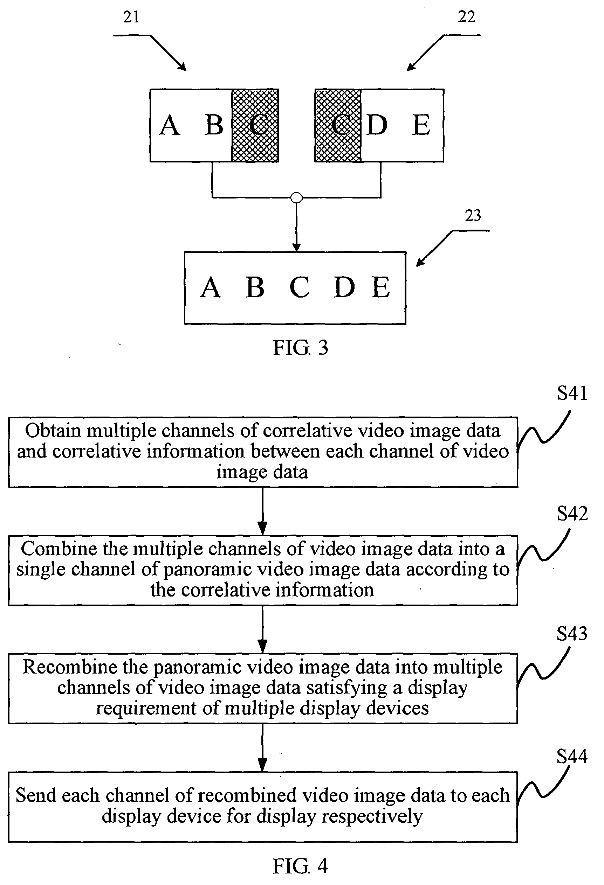

For the purpose of reference and clarity, technical terms, short forms or abbreviations used in this specification are concluded as follows:
H.320: ITU-T Recommendation H.320, Narrow-band visual telephone systems and terminal equipment, a standard defined by International Telecommunication Union Telecommunication Standardization Section, which specifies a multimedia communication system based on a narrow-band switching system;
H.323: ITU-T Recommendation H.323, Packet-based Multimedia Communications Systems, a standard defined by International Telecommunication Union Telecommunication Standardization Section, which specifies an architecture of a multimedia communication system based on a packet switching system;
IP: Internet Protocol, that is, network protocol;
ISDN: Integrated Services Digital Network, that is, integrated services digital network;
ITU-T: International Telecommunication Union Telecommunication Standardization Sector, that is, International Telecommunication Union Telecommunication Standardization Sector;
RTP: Real-time Transport Protocol, real-time transport protocol;
MCU: Multipoint Control Unit, multipoint control unit;
UDP: User Datagram Protocol, user datagram protocol;
YPbPr: luminance (Y) and color difference (Pb/Pr);
DVI: Digital Visual Interface, digital visual interface;
HDMI: High Definition Multimedia Interface, high definition multimedia interface;
VGA: Video Graphic Array, video graphic array;
MPEG: Moving Pictures Experts Group, that is, Moving Pictures Experts Group, where MPEG1, MPEG2 and MPEG4 are all MPEG standards;
video images correlative to each other (which are referred to as correlative video images hereinafter in order to facilitate description): video images obtained by multiple cameras in the same scenario, where generally, since the cameras are placed randomly, an overlapping area exists between these images, and as shown in FIG. 2, shaded parts are an overlapping area between an image 21 and an image 22, and the image 21 and the image 22 are correlative images;
image combination: combining multiple small-sized (small viewing-angle) images from the same scenario into a large-sized (wide viewing-angle) image; and processing the overlapping area between the correlative images during combination, for example, the image 21 and the image 22 shown in FIG. 2 are processed to obtain an image 23, as shown in FIG 3; and
image recombination: partitioning and filtering a large-sized video image to form multiple small-sized video images.

The technical solutions in the embodiments of the present invention are clearly and fully described in the following with reference to the accompanying drawings in the embodiments of the present invention. Obviously, the embodiments to be described are only a part rather than all of the embodiments of the present invention. Based on the embodiments of the present invention, all other embodiments obtained by persons of ordinary skill in the art without creative efforts shall fall within the protection scope of the present invention.

An embodiment of the present invention discloses a method for processing video image data, where obtained multiple channels of correlative video image data are combined into a single channel of panoramic video image data, and according to a display requirement, the panoramic video image data is recombined into one or multiple channels (equal to the number of display devices) of video image data, and the video image data is displayed by a display device.

The number of display devices may be multiple, and after combined panoramic video image data is recombined into multiple channels of video image data, the recombined video image data may be respectively sent to each display device. The display device performs display according to a position of each channel of video image data in the panoramic video image data, so as to provide wide viewing-angle visual experience for users. As shown in FIG 4, a specific process includes the following steps.

Step S41: Obtain multiple channels of correlative video image data and correlative information between each channel of video image data.

The multiple channels of correlative video image data are from multiple cameras that are disposed in the same scenario, and these cameras are placed at different positions in the scenario.

The correlative information includes: physical position information that is used to indicate a video image data, and capture timestamp information of the video image data.

Step S42: Combine the multiple channels of video image data into a single channel of panoramic video image data according to the correlative information.

Specifically, the multiple channels of video image data are combined according to physical position information and capture timestamp information of each channel of video image data, to form the single channel of panoramic video image data.

Step S43: Recombine the panoramic video image data into multiple channels of video image data satisfying a display requirement.

The panoramic video image data is recombined and filtered into the corresponding number of channels of video image data according to the number of display devices, a supported size of a frame, and a supported format of the video image data.

Step S44: Send each channel of recombined video image data to each display device for display respectively.

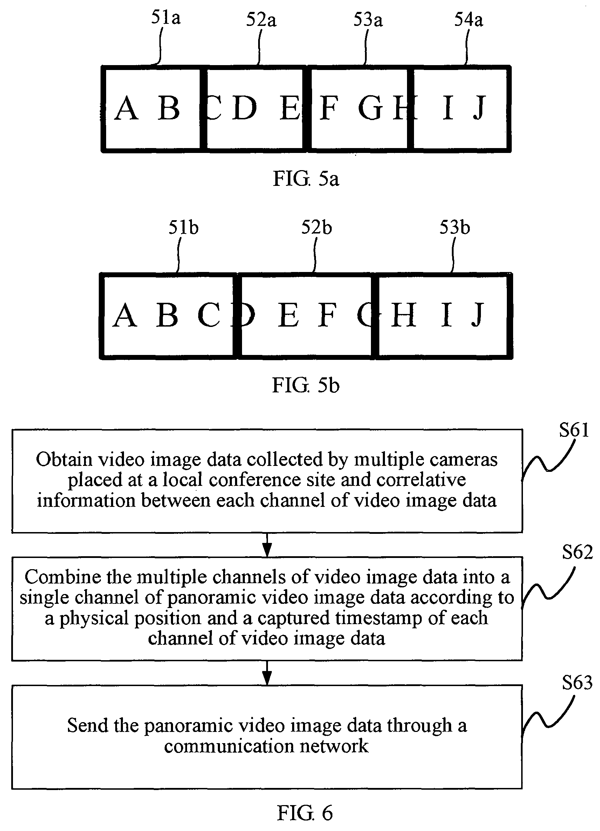

If the number of the display devices is four, as shown in FIG. 5a, which are respectively 51a, 52a, 53a and 54a, the panoramic video image data is recombined into four channels according to display positions, and the four channels are respectively transmitted to corresponding display devices for display, so that displayed images may be combined into a wide viewing-angle video image if each display device is arranged according to positions of the images in the panoramic video image data. If the number of the display devices is three, as shown in FIG. 5b, which are respectively 51b, 52b and 53b, the panoramic video image data is recombined into three channels according to image display positions, and the three channels are respectively transmitted to corresponding display devices for display. In addition, a size of a display frame supported by a display device may be different, so that when the panoramic video image data is recombined, the panoramic video image data needs to be recombined, according to the size of the display frame supported by the display device, into video image data with a corresponding size, for example, a display device supports an HDMI video input interface and meanwhile supports a 1080p video format, and a resolution of a panoramic image is 4000*1080, and therefore, when panoramic video image data is recombined, the panoramic video image data is properly recombined and filtered into two channels of 1080p video image data with a resolution of 1920*1080 for display.

It should be noted that, in the forgoing step S41, a type of a video interface for obtaining video images may be any one or several kinds of the following: a YPbPr interface, a DVI interface, an HDMI interface and a VGA interface, that is, video input interfaces provided by each camera may be the same, and may also be different., In the forgoing step S43, a format of the recombined video image data is consistent with a video image format supported by a display device, and is determined according to the video image format supported by the display device.

Furthermore, it should be noted that, a video input interface type in the forgoing step S41 and a video output interface type in step S44 may be the same (for example, the video input interface is a YPbPr interface, and the video output interface is also the YPbPr interface) or different (for example, the video input interface is the YPbPr interface, and the video output interface may be an HDMI interface). When a video interface type and a video image data format that are supported by each display device are different, after the single channel of panoramic video image data is recombined into multiple channels of video image data, a format of each channel of video image data also needs to be converted respectively according to a video interface type and a video image format that are supported by a corresponding display device, and then the video image data is sent to the corresponding display device.

In this embodiment of the present invention, after the multiple channels of video image data collected by the multiple cameras are obtained, the multiple channels of video image data are combined into the single channel of panoramic video image data, and are recombined into several channels of video image data according to a display requirement, and then the several channels of video image data are sent to display devices for display. The displayed video images can be combined into a wide viewing-angle video image by merely arranging the display devices according to positions of the video images in the panoramic video image data, so as to provide better visual experience for users. Moreover, in this embodiment of the present invention, a process of combining the multiple channels of video image data into the single channel of panoramic video image data may eliminate an overlapping situation existing between each channel of video image data. Therefore, an overlapping phenomenon existing between images obtained by each camera may be allowed, which means that no particularly strict requirement is imposed on a position where a camera is placed and a distance between a user and a camera set, so that installation complexity of the camera is lowered.

The display device may also be a display device that is adaptive to the panoramic video image data, and in this case, the number of display devices may be one. After the combined panoramic video image data is recombined into multiple channels of video image data, the multiple channels of video image data are respectively sent to the display devices according to positions of the multiple channels of video image data in the panoramic video image data, and the display device combines each channel of video image data into panoramic video image data for display. This embodiment of the present invention may be applied to a remote panoramic videoconferencing process, where each party taking part in a conference may send their own video image data to an opposite party (that is, a video image data sending process), and receive and display video image data that is sent by the opposite party (that is, a video image data receiving process).

As shown in FIG. 6, the video image data sending process includes the following steps.

Step S61: Obtain video image data collected by multiple cameras placed at a local conference site and correlative information between each channel of video image data.

Each camera is placed at a different position, but obtained video image data is correlative, and the correlative information includes a physical position and a capture timestamp of each channel of video image data.

Step S62: Combine the multiple channels of video image data into a single channel of panoramic video image data according to a physical position and a capture timestamp of each channel of video image data.

Step S63: Send the panoramic video image data through a communication network.

Persons skilled in the art may understand that, in the forgoing step S61, processes of obtaining the video image data collected by the multiple cameras and obtaining the correlative information between each channel of video image data are implemented simultaneously, and it is doubtless that, to enable a user in front of multiple displayers to view frames captured by the cameras at the same same, it must be ensured that the multiple cameras collect scenario images synchronously. In addition, to ensure integrity of transmitted video images, it must be ensured that no disconnection occurs between scenario images shot by adjacent cameras, and an overlapping area is preferred, where the overlapping area may be removed in an image combining process.

In this embodiment, a network interface of the communication network may be: an ISDN interface, an E1 interface, or a V35 interface, where the ISDN interface, the E1 interface, or the V35 interface is based on circuit switching, an Ethernet interface based on packet switching, or a wireless port based on a wireless connection.

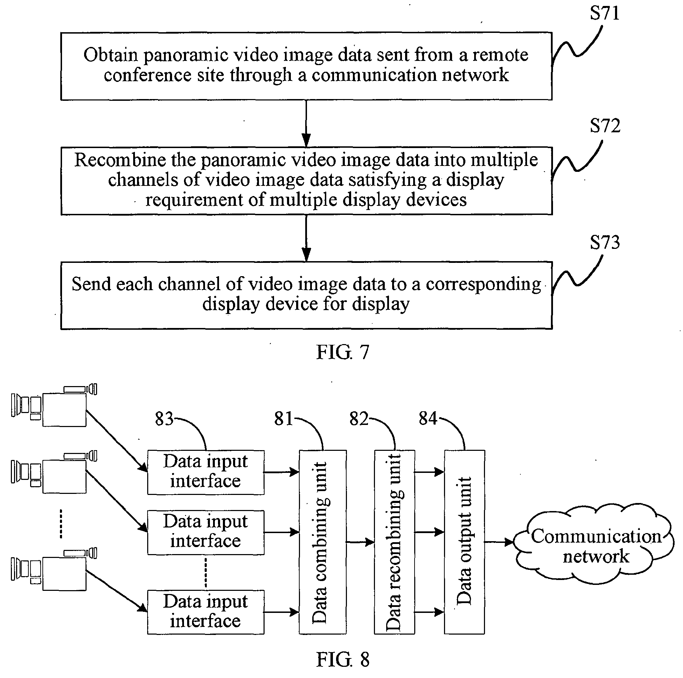

Being corresponding to the forging video image sending process, as shown in FIG 7, the video image data receiving process includes the following steps.

Step S71: Obtain panoramic video image data sent from a remote conference site through a communication network.

Step S72: Recombine the panoramic video image data into multiple channels of video image data satisfying a display requirement.

Step S73: Send each channel of video image data to a corresponding display device for display.

In other embodiments, the video image data sending process may also be: after obtaining multiple channels of video image data and correlative information between each channel of video image data, directly sending the obtained video image data and correlative information through a communication network. Correspondingly, the video image data receiving process is: after receiving the multiple channels of video image data and the correlative information, combining the multiple channels of video image data into a single channel of panoramic video image data according to the correlative information, and recombining the panoramic video image data into multiple channels of video image data according to the number of display devices and sending the recombined video image data to corresponding display devices for display. It should be noted that, in these embodiments, the correlative information between the multiple channels of video image data may be embedded in the video image data (or compressed video image data) for transmission, for example, when the communication network is the Ethernet, the correlative information may be embedded in a video RTP packet for transmission, which facilitates synchronization between the correlative information and the video image data. Definitely, the correlative information may also be transmitted separately, for example, transmitted through an independent data channel.

In other embodiments, the video image data sending process may further be: after obtaining multiple channels of video image data and correlative information between each channel of video image data, combining the multiple channels of video image data into a single channel of panoramic video image data according to the correlative information, and after recombining the panoramic video image data into multiple channels of video image data according to the number of display devices (display devices at the remote coferrence site), sending the recombined video image data through a communication network. Correspondingly, the video image data receiving process is: receiving the multiple channels of recombined video image data, and directly sending the received video image data to display devices at a local conference site for display.

In addition, in the forgoing embodiment, a transmitting end may send the panoramic video image data directly, and may also send the panoramic video image data after coding. The coding manner may be: H.261, H.263, H.264, MPEG1, MPEG2 or MPEG4. Correspondingly, the panoramic video image data received by a receiving end may be uncoded raw data, and may also be coded data. It should be noted that, a size of a combined image is generally several times larger than a size of an original image, and in this case, even if a coder is used for coding, the amount of transmitted data is still larger, which imposes a strict requirement on capability of the coder. Based on the forgoing description, in other embodiments of the present invention, multiple coders are adopted for parallel processing, and furthermore, due to randomness of image data, synchronization of a sequence of coded data cannot be ensured, and to ensure that images displayed by multiple displayers at a display end are shot at the same time, the coded data needs to be synchronized.

Specifically, the forgoing process of recombining the panoramic video image data is actually an image partitioning process, which includes the following steps.
a. Partition the panoramic video image into multiple sub-images, and meanwhile obtain multiple pieces of synchronous information for generating the multiple sub-images, where each sub-image is corresponding to one piece of the synchronous information.
   The synchronous information is specifically a timestamp of the received panoramic video image data and may also be a self-defined sequence number. A manner for defining the sequence number needs to ensure that sequence numbers of multiple sub-images obtained by partitioning the same panoramic video image data meet a preset rule, for example, the sequence numbers may be the same or consecutive.
b. Allocate reconstruction information for a partitioning manner of each sub-image, where the reconstruction information is used for recording the partitioning manner of each sub-image.
c. Send each sub-image and corresponding synchronous information and reconstruction information of each sub-image to another device.

Therefore, the forgoing method for processing video image data further includes a synchronization process and a reconstruction process, which are respectively introduced as follows.

The synchronization process is as follows:
Receive each sub-image and corresponding synchronous information and reconstruction information of each sub-image, where the each sub-image and corresponding synchronous information and reconstruction information of each sub-image are sent by another device, and then classify the sub-images according to the synchronous information to find multiple sub-images obtained by partitioning the same panoramic video image data, that is, image information obtained at the same time.

A device for implementing the forgoing method includes a receiving buffer, a reconstruction buffer, and a sending buffer. The receiving buffer receives partitioned sub-images, where synchronous information of sub-images that belong to the same panoramic image meets a preset rule, for example, the synchronous information is the same or consecutive, the reconstruction buffer stores a sub-image to be reconstructed, and the sending buffer stores a reconstructed image.

The reconstruction information may be a partitioning manner, and the reconstruction process is: reconstructing the classified sub-images according to the partitioning manner to obtain multiple channels of video image data, where each channel of video image data is arranged according to a position of each channel of video image data in the panoramic video image data.

The synchronization process and the reconstruction process may specifically include:
Step a: Implement an initialization operation, that is, determine minimum synchronous information MinSyinfo.
   The "minimum synchronous information" in this step may not be minimum, and may be randomly selected and assumed to be the "minimum synchronous information".
Step b: Take an unselected sub-image from the receiving buffer, and obtain synchronous information CurrSyinfo.
Step c: Judge whether the MinSyinfo is greater than the CurrSyinfo, and if the MinSyinfo is greater than the CurrSyinfo, proceed to step d; otherwise, proceed to step e.
Step d: Determine the CurrSyinfo as the MinSyinfo, and return to step b.
Step e: Perform CDT (Check Delay Time, check delay time) processing, and if the delay time is greater than a specified delay, proceed to step f; otherwise, proceed to step g.
Step f: Directly output an image stored in the sending buffer, and return to step a.
Step g: Judge whether the MinSyinfo is smaller than the CurrSyinfo, and if the MinSyinfo is smaller than the CurrSyinfo, return to step b; otherwise, proceed to step h.
Step h: Perform CDT processing, and if the delay time is greater than a specified delay, proceed to step f; otherwise, proceed to step i.
Step i: Store the sub-image in the reconstruction buffer.
Step j: Judge whether an unselected sub-image exists in the receiving buffer, and if an unselected sub-image exists in the receiving buffer, return to step b; and if no unselected sub-image exists in the receiving buffer, proceed to step k.
Step k: Reconstruct the sub-image stored in the reconstruction buffer according to the reconstruction information, store a reconstructed image to the sending buffer, and proceed to step f.

It may be understood that, after the sending buffer sends data in step f, the buffer is not released at once, so that when the process proceeds to step f from step e or step h, the image stored in the sending buffer is a previous frame of image that is successfully reconstructed; and the image stored in the sending buffer is updated in step k, where the update may be implemented in a data overwriting manner, and may also be implemented in a manner of releasing the sending buffer and then storing data in the sending buffer, or in another data updating manner.

In other embodiments, in a recombining process, before the multiple sub-images and the corresponding synchronous information and reconstruction information are sent, the multiple sub-images and the corresponding synchronous information and reconstruction information are coded, where a coding manner may be a compression standard code stream format that meets various current mainstream standards, such as h261, h263, h263++, mpeg1, mpeg2 or mpeg4.

Correspondingly, in the synchronization process, after the sub-images and the corresponding synchronous information and reconstruction information are received, decoding is performed first, and being corresponding to multiple coders in the recombining process, multiple decoders may also be set. Afterward, the decoded sub-images are classified according to the synchronous information to find multiple sub-images obtained by partitioning the same panoramic video image data, that is, image information obtained at the same time.

An embodiment of the present invention further discloses an apparatus for processing video image data, which may implement the method disclosed in the foregoing embodiment.

A structural form of the apparatus for processing video image data is shown in FIG. 8, which includes a data combining unit 81, a data recombining unit 82, data input interfaces 83, and a data output unit 84.

The data input interfaces 83 are multiple, which are respectively connected to multiple cameras, and configured to obtain multiple channels of video image data and correlative information between each channel of video image data, where the correlative information includes: information that is used to indicate a physical position of the video image data, and capture timestamp information of the video image data.

The data combining unit 81 is configured to combine the multiple channels of video image data into a single channel of panoramic video image data according to the correlative information. Specifically, according to a physical position and capture time of each channel of video image data, the multiple channels of video image data are combined into the single channel of panoramic video image data.

The data recombining unit 82 is configured to, according to the number and the size of display devices and a video image format supported by the display devices, recombine the single channel of panoramic video image data into multiple channels of video image data satisfying a display requirment of multiple display devices.

The data output unit 84 is configured to send, through a communication network, the multiple channels of video image data processed and obtained by the data recombining unit 82 to a remote videoconferencing device (which may be a terminal, and may also be an MCU).

Therefore, the remote videoconferencing device may arrange the multiple channels of video image data according to positions of video images in the panoramic video image, and then transmits the video image data to the multiple display devices. Video images displayed by all the display devices may be combined into a wide viewing-angle video image, so as to bring panoramic visual experience to users.

The data input interface 83 may be a YPbPr interface, a DVI interface, an HDMI interface, or a VGA interface.

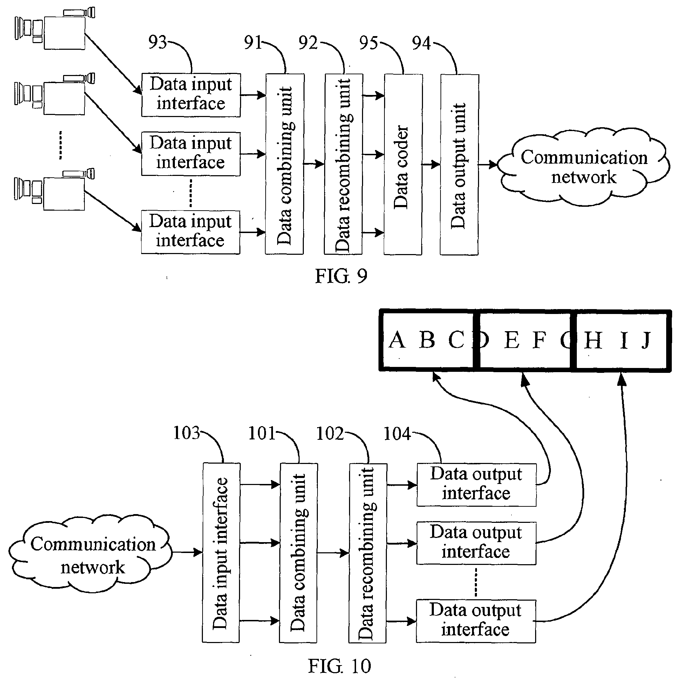

It should be noted that, in order to reduce the amount of data to be transmitted and ensure transmission safety, another structure of the apparatus for processing video image data may further include a functional unit for compression and coding. As shown in FIG. 9, the apparatus includes a data combining unit 91, a data recombining unit 92, data input interfaces 93, a data output unit 94, and a data coder 95.

Functions of the data combining unit 91, the data recombining unit 92, the data input interface 93, and the data output unit 94 are basically the same as functions of the data combining unit 81, the data recombining unit 82, the data input interface 83, and the data output unit 84 respectively.

The data coder 95 is configured to obtain multiple channels of video image data recombined and obtained by the data recombining unit 92, and after the obtained video image data is coded, provide the coded video image data for the data output unit 94. A coding manner may be: H.261, H.263, H.264, MPEG1, MPEG2, or MPEG4.

In order to accelerate a data processing speed to ensure real-time data transmission, in other embodiments, multiple data coders may be adopted to simultaneously perform coding processing on the multiple channels of video image data recombined and obtained by the data recombining unit 92. In this case, each channel of video image data processed and obtained by the data recombining unit 92 includes: each sub-image obtained by recombining the panoramic video image and corresponding synchronous information and reconstruction information of each sub-image. Afte the data output unit 94 outputs the multiple channels of video image data coded by the multiple coders, a device that receivs the multiple channels of video image data may perform a synchronization process and a reconstruction process according to the synchronous information and the reconstruction information, where specific content of the synchronization process and the reconstruction process may be made referrence to the description of the foregoing method, and is not repeated here.

The device that receivs the multiple channels of video image data is another structural form of the apparatus for processing video image data, which includes multiple data input interfaces and multiple data output interfaces, and further includes data decoders, a data synchronizing unit, and a data reconstructing unit.

The data input interface is configured to obtain multiple channels of coded video image data.

The data decoders are multiple, which are configured to simultaneously decode the multiple channels of coded video image data, where multiple channels of decoded video image data include multiple sub-images obtained by partitioning the panoramic video image and corresponding synchronous information and reconstruction information of the multiple sub-images.

The data synchronizing unit is configured to classify the decoded sub-images according to corresponding synchronous information of the decoded sub-images, and a specific process may be made referrence to the description in the foregoing method embodiment.

The data reconstructing unit is configured to reconstruct the classified sub-images according to the reconstruction information to obtain multiple channels of video image data, and provide the obtained video image data to the data output interface, where each channel of video image data is arranged according to a position of each channel of video image data in the panoramic video image data.

Another structural form of the apparatus for processing video image data is shown in FIG. 10, which includes a data combining unit 101, a data recombining unit 102, a data input interface 103, and multiple data output interfaces 104.

Functions of the data combining unit 101 and the data recombining unit 102 are basically the same as the functions of the data combining unit 81 and the data recombining unit 82 respectively.

A difference between this structure and the structure shown in FIG. 8 is that, multiple channels of video image data and correlative information between each channel of video image data are sent by another device through a communication network, where the multiple channels of video image data and the correlative information between each channel of video image data are obtained by the data input interface 103. The multiple data output interfaces 104 are respectively connected to multiple display devices, and configured to arrange, according to positions of video images in the panoramic video image, multiple channels of video image data processed and obtained by the data recombining unit 102, and send the multiple channels of video image data to display devices, where video images displayed by all the display devices may be combined into a wide viewing-angle video image.

Specifically, the data input interface 103 may be formed by a network interface and a data receiving unit, where the network interface is configured to establish a connection with the communication network, and the data receiving unit is configured to receive, through the network interface, video image data transmitted by another device through the communication network.

The network interface may be an ISDN interface, an E1 interface, or a V35 interface, where the ISDN interface, the E1 interface, or the V35 interface is based on circuit switching, an Ethernet interface based on packet switching, or a wireless port based on a wireless connection.

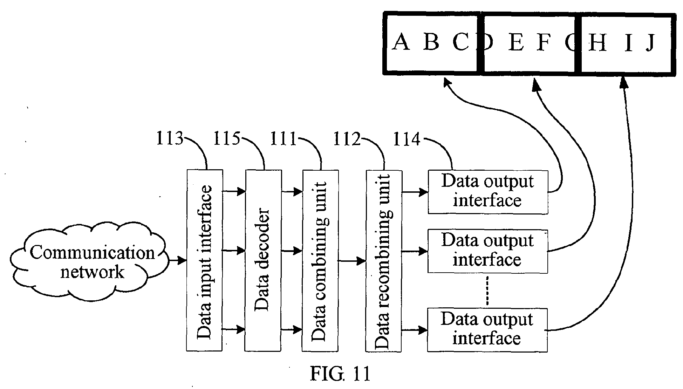

In addition, if multiple channels of video image data and correlative information between each channel of video image data are coded, where the multiple channels of video image data and the correlative information between each channel of video image data are received by the data input interface 103, another structure of the apparatus for processing video image data needs to include a functional unit for decoding, as shown in FIG. 11, which include a data combining unit 111, a data recombining unit 112, a data input interface 113, and multiple data output interfaces 114, and further include a data decoder 115.

Functions of the data combining unit 111, the data recombining unit 112, the data input interface 113, and the data output interface 114 are basically the same as the functions of the data combining unit 101, the data recombining unit 102, the data input interface 103, and the data output interface 104 respectively.

The data decoder 115 is configured to decode multiple channels of video image data and correlative information between each channel of video image data, where the multiple channels of video image data and the correlative information between each channel of video image data are obtained by the data input interface 113, and provide the decoded multiple channels of video image data and correlative information between each channel of video image data for the data combining unit 111.

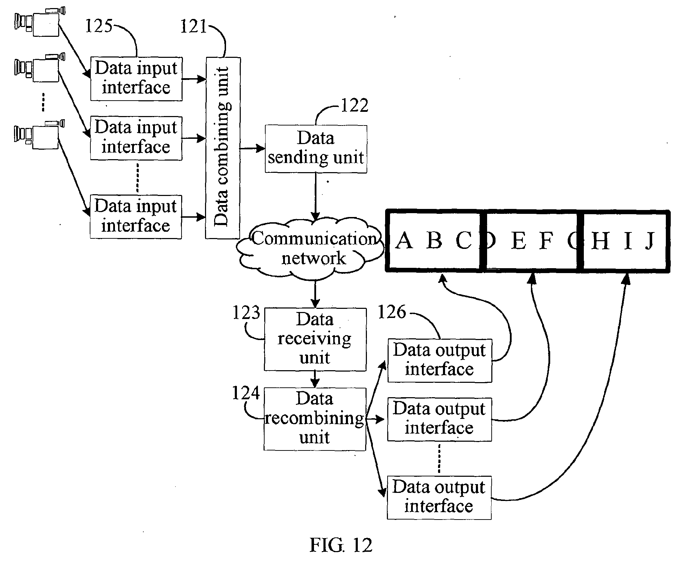

In addition, an embodiment of the present invention further provides a videoconferencing system, and a specific structure of the system is shown in FIG. 12, which includes a data combining unit 121, a data sending unit 122, a data receiving unit 123, a data recombining unit 124, multiple data input interfaces 125, and multiple data output interfaces 126.

The data combining unit 121, the data sending unit 122, and the data input interfaces 125 are located at a videoconferencing site at one side. The multiple data input interfaces 125 obtain multiple channels of video image data and correlative information between each channel of video image data, the data combining unit 121 combines the multiple channels of video image data into a single channel of panoramic video image data according to the correlative information, and then the data sending unit 122 sends the single channel of panoramic video image data to a remote conference site at the other side through a communication network.

The data receiving unit 123, the data recombining unit 124, and the data output interfaces 126 are located at the remote conference site at the other side. The data receiving unit 123 receives the single channel of panoramic video image data that is carried on the communication network, and then provides the panoramic video image data to the data recombining unit 124, the data recombining unit 124 recombines, according to the number of display devices, a supported size of a frame, and a supported video image format, the single channel of panoramic video image data into multiple channels of video image data satisfying a display requirement of multiple display devices, and the data output interfaces 126 provide the video image data to corresponding display devices.

The display devices are placed according to positions of the video images in the panoramic video image, and the video images displayed by all the display devices may be combined into a wide viewing-angle video image, so as to bring panoramic visual experience to users.

It should be noted that, the data input interface 125 and the data output interface 126 may be YPbPr interfaces, DVI interfaces, HDMI interfaces or VGA interfaces. In addition, the types of the data input interface 125 and the data output interface 126 may be different, and a format of video image data obtained by the data input interface 125 may be converted according to the type of the data output interface 126 during recombination of the data recombining unit 123. For example, the data input interface 125 is a DVI interface, the obtained video image data is in a DVI format, and the data output interface 126 is an HDMI interface, so that when the data recombining unit 123 recombines video image data, video image data in a DVI format needs to be converted into video image data in an HDMI format.

The conference sites at both sides are required to play roles of a transmitter and a receiver at the same time, that is, to send video image data from a local conference site through the data input interfaces 125, the data combining unit 121, and the data sending unit 122, and receive and process video image data from a remote conference site through the data receiving unit 123, the data recombining unit 124, and the data output interfaces 126.

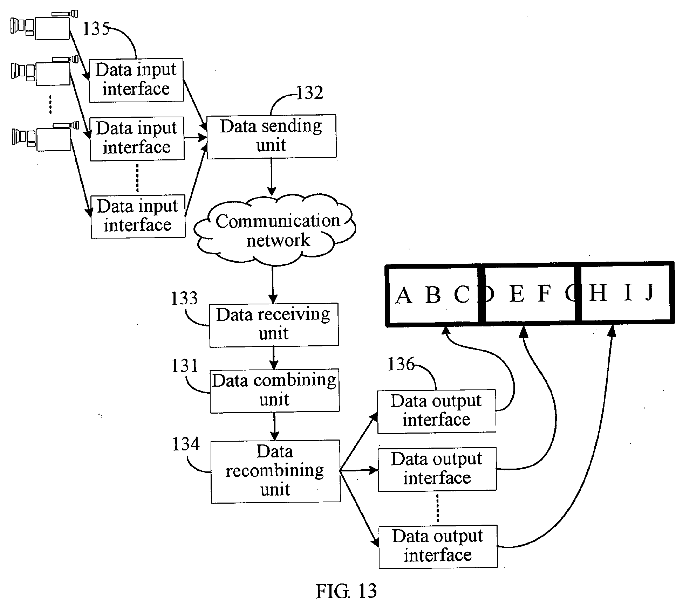

It should be noted that, in a system with another structural form, a transmitter only needs to obtain multiple channels of video image data and correlative information between each channel of video image data through the data input interfaces 125, and then send the obtained video image data and correlative information through a communication network to a remote conference site. A receiver obtains the multiple channels of video image data and the correlative information between each channel of video image data from the communication network, and then performs operations such as combination and recombination. FIG 13 is another schematic structural diagram of a videoconferencing system according to an embodiment of the present invention. The system includes a data combining unit 131, a data sending unit 132, a data receiving unit 133, a data recombining unit 134, multiple data input interfaces 135, and multiple data output interfaces 136.

The data sending unit 132 and the multiple data input interfaces 135 are located at a conference site at one side, and the data receiving unit 133, the data combining unit 131, the data recombining unit 134, and the multiple data output interfaces 136 are located at a conference site at the other side.

The multiple data input interfaces 135 obtain multiple channels of video image data and correlative information between each channel of video image data, and the data sending unit 132 sends the multiple channels of video image data and the correlative information between each channel of video image data to the conference site at the other side through a communication network; and the data receiving unit 133 at the conference site at the other side receives the multiple channels of video image data and the correlative information between each channel of video image data, and then provides the received video image data and correlative information for the data combining unit 131, the data combining unit 131 combines the multiple channels of video image data into a single channel of panoramic video image data according to the correlative information, and then provides the single channel of panoramic video image data for the data recombining unit 134, the data recombining unit 134 recombines, according to the number of display devices, a supported size of a frame, and a supported video image format, the single channel of panoramic video image data into multiple channels of video image data satisfying a display requirement of multiple display devices, and the data output interfaces 136 provides the multiple channels of video image data for corresponding display devices.

It should be noted that, since the data sending units (the data sending units 122 and 132) send the video image data through the communication network, in order to reduce the amount of data to be transmitted and ensure transmission safety, data sent by the data sending units may be coded. Correspondingly, after receiving the data sent through the communication network, the data receiving units (the data receiving units 123 and 133) decode the data.

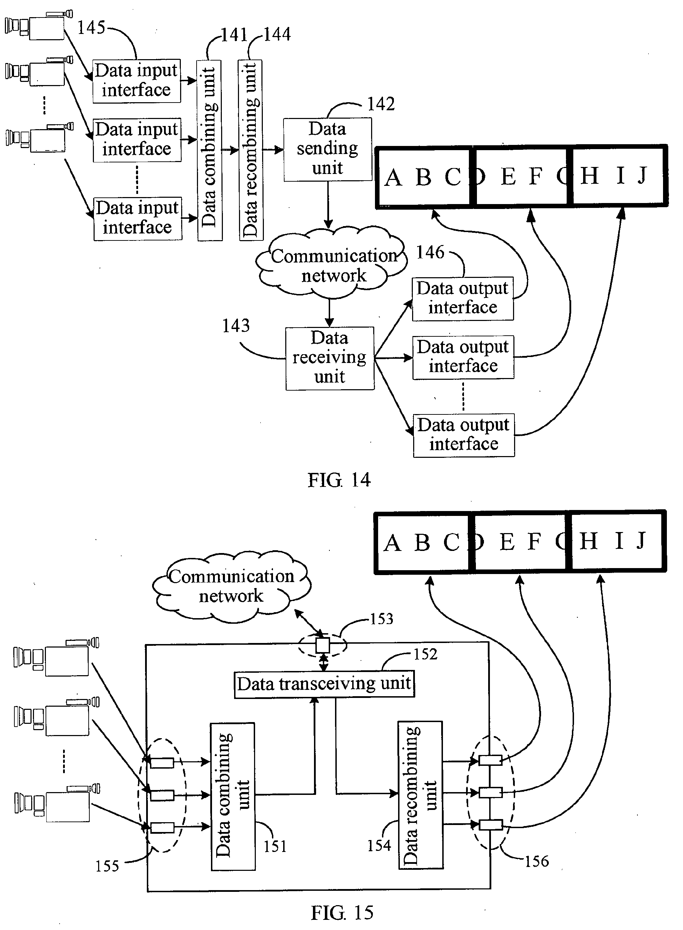

It should be noted that, in a system with another structural form, after receiving multiple channels of video image data and correlative information, a transmitter combines the multiple channels of video image data into a single channel of panoramic video image data according to the correlative information, then recombines the single channel of panoramic video image data into several channels of video image data, and sends the several channels of video image data; and a receiver receives the several channels of video image data, and then provides the the several channels of video image data for display devices at a local conference site for display. A specific structural form is shown in FIG 14, which includes a data combining unit 141, a data sending unit 142, a data receiving unit 143, a data recombining unit 144, multiple data input interfaces 145, and multiple data output interfaces 146.

Functions of the units are basically the same as the units in FIG. 12 and FIG 13, and a difference lies in that, the data input interfaces 145, the data combining unit 141, the data recombining unit 144, and the data sending unit 142 are located at a conference site at one side, and the data receiving unit 143 and the data output interfaces 146 are located at a conference site at the other side, which means that the data recombining unit 144 located at the conference site at one side needs to recombine video image data according to the number of display devices, a supported size of a frame, and a supported video image format at the conference site at the other side.

In addition, another structure may further include data coders, data decoders, a data synchronizing unit, and a data reconstructing unit.

The data coders are multiple, which are disposed at the conference site where the data recombining unit 144 is located, and configured to simultaneously process multiple channels of video image data recombined and obtained by the data recombining unit 144, where each channel of video image data recombined and obtained by the data recombining unit 144 includes each sub-image obtained by partitioning the panoramic video image, and corresponding synchronous information and reconstruction information of each sub-image.

The number of the data decoders is the same as the number of the data coders. The data decoders are disposed at the conference site where the data receiving unit 143 is located, and configured to simultaneously decode multiple channels of coded video image data received by the data receiving unit 143.

The data synchronizing unit is configured to classify, according to corresponding synchronous information of sub-images, sub-images decoded by the data decoders, and a specific process may be made referrence to the description in the foregoing method embodiment.

The data reconstructing unit is configured to reconstruct the classified sub-images according to the reconstruction information to obtain multiple channels of video image data, and provide the obtained multiple channels of video image data for the data output interface, where each channel of video image data is arranged according to a position of each channel of video image data in the panoramic video image data.

It can be seen that, this embodiment of the present invention is suitable to a situation that videoconferencing sites at both sides are the same (that is, the number of display devices, a supported size of a frame, and a supported video image format are the same).

Being corresponding to the forgoing method and apparatus for processing video image data and the videoconferencing system, an embodiment of the present invention further discloses a videoconferencing terminal at the same time, and since roles played by both sides of a video conference are mutual (that is, both act as a transmitter and a receiver at the same time), a specific structure of the videoconferencing terminal is shown in FIG. 15, which includes a data combining unit 151, a data transceiving unit 152, a network interface 153, a data recombining unit 154, multiple data input interfaces 155, and multiple data output interfaces 156.

The network interface 153 is configured to establish a connection with an external communication network, and the data transceiving unit 152 is configured to obtain data sent from the communication network and send data to the communication network.

Functions of other functional units, such as the data combining unit 151, the data recombining unit 154, the data input interfaces 155, and the data output interfaces 156, may be made referrence to the content of the apparatus for processing video image data and the videoconferencing system in the foregoing description.

As a transmitter, the videoconferencing terminal needs to obtain multiple channels of video image data and correlative information between each channel of video image data at a local conference site, combine the obtained video image data and correlative information into a single channel of panoramic video image data, and send the single channel of panoramic video image data to a remote conference site through the communication network; and meanwhile, as a receiver, the videoconferencing terminal needs to receive a panoramic video image data sent from the remote conference site through the communication network, recombine the panoramic video image data into multiple channels of video image data, and then transmit the multiple channels of video image data to display devices at the local conference site.

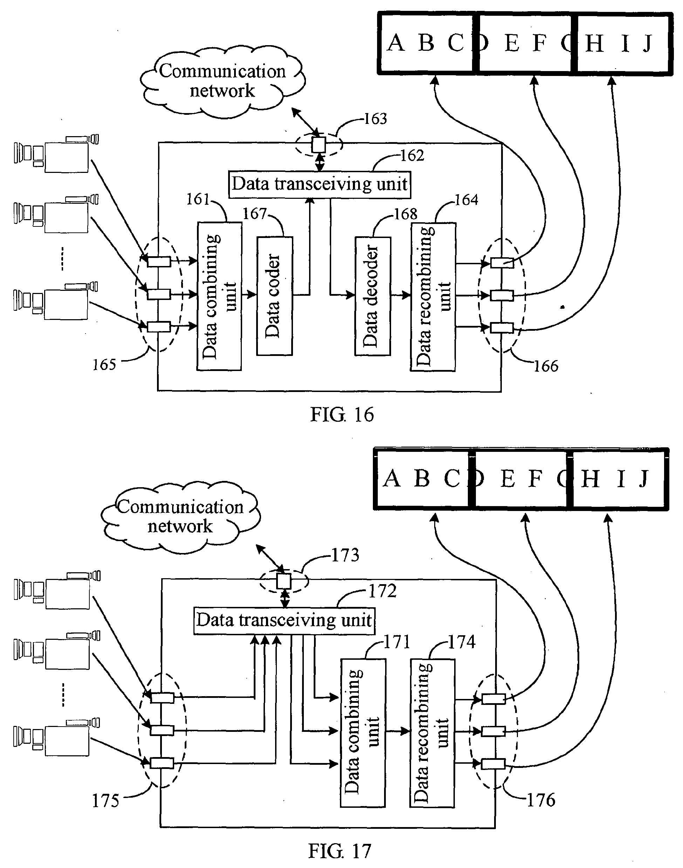

FIG. 16 shows another structure of the videoconferencing terminal, which includes a data combining unit 161, a data transceiving unit 162, a network interface 163, a data recombining unit 164, multiple data input interfaces 165, and multiple data output interfaces 166, and further includes a data coder 167 and a data decoder 168.

Functions of the data combining unit 161, the data transceiving unit 162, the network interface 163, the data recombining unit 164, the data input interfaces 165, and the data output interfaces 166 are basically the same as the functions of the data combining unit 151, the data transceiving unit 152, the network interface 153, the data recombining unit 154, the data input interfaces 155, and the data output interfaces 156 respectively.

The data coder 167 codes data before the data transceiving unit 162 sends the data, and the data decoder 168 decodes the data after the data transceiving unit 162 receives the data.

Another structure of the videoconferencing terminal is shown in FIG. 17, which includes a data combining unit 171, a data transceiving unit 172, a network interface 173, a data recombining unit 174, multiple data input interfaces 175, and multiple data output interfaces 176.

Functions of the units are basically the same as the functions of the units in FIG. 15 respectively.

A difference lies in that, as a transmitter, the videoconferencing terminal obtains multiple channels of video image data and correlative information between each channel of video image data at a local conference site, and then directly sends the obtained video image data and correlative information to a remote conference site through a communication network. Meanwhile, as a receiver, the videoconferencing terminal receives multiple channels of video image data and correlative information between each channel of video image data at the remote conference site through the communication network, combines the received video image data and correlative information into a single channel of panoramic video image data, recombines the single channel of panoramic video image data into multiple channels of video image data, and transmits the multiple channels of video image data to display devices at the local conference site.

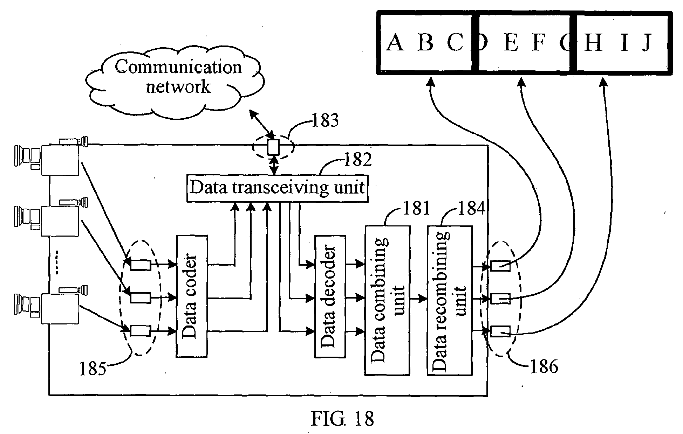

FIG. 18 shows another structure of the videoconferencing terminal, which includes a data combining unit 181, a data transceiving unit 182, a network interface 183, a data recombining unit 184, multiple data input interfaces 185, and multiple data output interfaces 186, and further includes a data coder 187 and a data decoder 188.

Functions of the units are basically the same as the functions of the units in FIG. 16 respectively.

A difference lies in that, as a transmitter, the videoconferencing terminal obtains multiple channels of video image data and correlative information between each channel of video image data at a local conference site, and codes and sends the obtained video image data and correlative information directly to a remote conference site through a communication network. Meanwhile, as a receiver, the videoconferencing terminal receives multiple channels of video image data and correlative information between each channel of video image data that are sent from the remote conference site through the communication network, decodes and combines the received video image data and correlative information into a single channel of panoramic video image data, then recombines the single channel of panoramic video image data into multiple channels of video image data, and transmits the multiple channels of video image data to display devices at the local conference site.

In other embodiments, as a transmitter, the videoconferencing terminal obtains multiple channels of video image data and correlative information between each channel of video image data at a local conference site, combines the obtained video image data and correlative information into a single channel of panoramic video image data, recombines, according to the number of display devices, a supported size of a frame, and a supported video image format at a remote conference site, the single channel of panoramic video image data into multiple channels of video image data satisfying a display requirement of multiple display devices, and sends the multiple channels of video image data to the remote conference site through a communication network (or through the communication network after coding). Meanwhile, as a receiver, the videoconferencing terminal receives multiple channels of video image data sent from the other side through the communication network, provides the received video image data for display devices at the local conference site for display (or provides the received video image data for the display devices at the local conference site for display after decoding). It should be noted that, in this case, during coding, multiple coders may be adopted to simultaneously code multiple channels of recombined video image data, and during decoding, multiple decoders are adopted to simultaneously decode multiple channels of coded video image data; and furthermore, a synchronization process and a reconstruction process are performed, that is, classifying, according to corresponding synchronous information of sub-images, sub-images decoded by the data decoders, and reconstructing the classified sub-images according to the reconstruction information to obtain multiple channels of video image data, where each channel of video image data is arranged according to a position of each channel of video image data in the panoramic video image data.

The embodiments in this specification are described in a progressive manner, each embodiment emphasizes a difference from the other embodiments, and the identical or similar parts between the embodiments may be made referrence to each other. Since the apparatuses disclosed in the embodiments are corresponding to the methods disclosed in the embodiments, the description of the apparatuses is simple and relevant parts may be made reference to the description of the methods.

Persons skilled in the art may understand that information, a message, and a signal may be represented by using any one of many different techniques and technologies. For example, the message and information mentioned in the forgoing description may be represented as a voltage, a current, an electromagnetic wave, a magnetic field or a magnetic particle, an optical field, or any combination of the forgoing.

Persons skilled in the art may further realize that, units and steps of algorithms according to the description of the embodiments disclosed by the present invention can be implemented by electronic hardware, computer software, or a combination of the two. In order to describe interchangeability of hardware and software clearly, compositions and steps of the embodiments are generally described according to functions in the forgoing description. Whether these functions are executed by hardware or software depends upon specific applications and design constraints of the technical solutions. Persons skilled in the art may use different methods for each specific application to implement the described functions, and such implementation should not be construed as a departure from the scope of the present invention.

Persons of ordinary skill in the art may understand that all or a part of the steps in the method of the forgoing embodiments may be accomplished through a program instructing relevant hardware. The program may be stored in a computer readable storage medium, and the storage medium may include a ROM, a RAM, a magnetic disk, or an optical disk.

The objectives, technical solutions, and beneficial effects of the present invention have been described in further detail through the forgoing specific embodiments. It should be understood that the forgoing descriptions are merely specific embodiments of the present invention, but are not intended to limit the protection scope of the present invention. Any modification, equivalent replacement, or improvement made without departing from the principle of the present invention should fall within the protection scope of the present invention.

## Claims

1. A method applied to a remote panoramic videoconferencing system for processing video image data, comprising:
Obtaining, by a videoconferencing terminal of a local conference site, multiple channels of correlative video image data and correlative information, wherein the multiple channels of correlative video image data are collected by multiple cameras placed at the local conference site of the remote panoramic videoconferencing system, the correlative information between each channel of video image data includes: information that is used to indicate a physical position of video image data, and captured timestamp information of the video image data;
Combining, by the videoconferencing terminal of the local conference site, the multiple channels of correlative video image data into a single channel of panoramic video image data by using the physical position and the timestamp information of each channel of video image data ;
after recombining the panoramic video image data into multiple channels of video image data satisfying a display requirement according to the number of display devices, a size of a frame supported by each of the display devices, and a format of the video image data supported by each of the display devices, sending the recombined video image data to the display devices of a remote conference site for display;
wherein a process of recombining the panoramic video image data comprises: a partitioning process, and the partitioning process comprises:
Partitioning, by the videoconferencing terminal of the local conference site, the panoramic video image into multiple sub-images, and meanwhile generating, by the videoconferencing terminal of the local conference site, synchronous information of each sub-image;
allocating, by the videoconferencing terminal of the local conference site, reconstruction information for each sub-image according to a partitioning manner, wherein the reconstruction information is used for recording the partitioning manner of each sub-image;
using multiple coders to simultaneously code the partitioned multiple channels of sub-images and the corresponding synchronous information and reconstruction information of the partitioned multiple channels of sub-images; and
sending, by the videoconferencing terminal of the local conference site, the multiple sub-images and corresponding synchronous information and reconstruction information of the multiple sub-images to a videoconferencing terminal of the remote conference site;
the method further comprises a synchronization process and a reconstruction process, wherein the synchronization process comprises:
receiving, by the videoconferencing terminal of the remote conference site, the sub-images, the synchronous information, and the reconstruction information;
using multiple decoders to simultaneously decode the received and coded information ; and
classifying, by the videoconferencing terminal of the remote conference site, the sub-images according to the synchronous information, wherein the sub-images that belong to the same panoramic video image belong to the same category; and
the reconstruction process comprises:
reconstructing, by the videoconferencing terminal of the remote conference site, the classified sub-images according to the reconstruction information to obtain multiple channels of video image data, wherein each channel of video image data is arranged according to a position of each channel of video image data in the panoramic video image data.

2. The method according to claim 1, wherein the synchronous information is a sequence number or a timestamp.

3. The method according to claim 1, wherein multiple pieces of synchronous information for generating the multiple sub-images specifically is: timestamps at the time of generating the panoramic video image data, or self-defined sequence numbers that are generated, wherein sequence numbers of multiple sub-images obtained by partitioning the same panoramic video image data are identical.

4. A videoconferencing system, comprising:
a data input interface, configured to obtain multiple channels of correlative video image data and correlative information, wherein the multiple channels of correlative video image data are collected by multiple cameras placed at a conference site of the remote panoramic videoconferencing system, the correlative information between each channel of video image data includes: information that is used to indicate a physical position of video image data, and captured timestamp information of the video image data;
a data combining unit, configured to process the multiple channels of correlative video image data into a single channel of panoramic video image data by using the physical position and the timestamp information of each channel of video image data;
a data recombining unit, configured to recombine the panoramic video image data into multiple channels of video image data satisfying a display requirement;
a data sending unit, configured to send, through a communication network, the coded multiple channels of video image data after encoding, wherein the coded multiple channels of video image data is processed and obtained by the data recombining unit;
a data receiving unit, configured to receive the multiple channels of video image data that are carried on the communication network;
multiple data output interfaces, connected to multiple external display devices of another conference site, and configured to respectively transmit each channel of decoded video image data after decoding to a corresponding display device, wherein each channel of decoded video image data is received by the data receiving unit;
wherein each channel of video image data recombiend and obtained by the data recombining unit comprises: each sub-image obtained by recombining the panoramic video image, and synchronous information and reconstruction information that are corresponding to each sub-image, wherein the reconstruction information is used for recording the partitioning manner of each sub-image;
the number of data coders and the number of data decoders are both multiple, the multiple data coders simultaneously code the multiple channels of video image data, and the multiple data decoders simultaneously decode the multiple channels of video image data;
the system further comprises:
a data synchronizing unit, configured to classify the decoded sub-images according to corresponding synchronous information of the sub-images; and
a data reconstructing unit, configured to reconstruct the classified sub-images according to the reconstruction information to obtain multiple channels of video image data, and provide the obtained video image data for the multiple data output interfaces, wherein each channel of video image data is arranged according to a position of each channel of video image data in the panoramic video image data.

5. A videoconferencing terminal, comprising:
a data input interface, configured to obtain multiple channels of correlative video image data and correlative information, wherein the multiple channels of correlative video image data are collected by multiple cameras placed at a local conference site of the remote panoramic videoconferencing system,the correlative information between each channel of video image data includes: information that is used to indicate a physical position of video image data, and captured timestamp information of the video image data;
a data combining unit, configured to process the multiple channels of correlative video image data into a single channel of panoramic video image data by using the physical position and the timestamp information of each channel of video image data;
a data recombining unit, configured to recombine the panoramic video image data processed and obtained by the data combining unit into multiple channels of video image data satisfying a display requirement;
a data transceiving unit, configured to send, through a communication network, the multiple channels of video image data processed and obtained by the data recombining unit to a remote videoconferencing device, and receive multiple channels of recombined video image data sent by the videoconferencing device through the communication network;
multiple data output interfaces, connected to multiple external display devices, and configured to respectively transmit each channel of video image data received by the data transceiving unit to a corresponding display device;
multiple data coders, configured to simultaneously code the multiple channels of video image data recombined and obtained by the data recombining unit, and then provide the coded video image data to the data transceiving unit, wherein each channel of video image data comprises each sub-image obtained by partitioning the panoramic video image, and synchronous information and reconstruction information that are corresponding to each sub-image, wherein the reconstruction information is used for recording the partitioning manner of each sub-image;
a data decoder, configured to simultaneously decode the multiple channels of video image data received by the data transceiving unit, and then provide the decoded video image data to a data synchronizing unit;
the data synchronizing unit, configured to classify, according to corresponding synchronous information of the sub-images, the sub-images decoded by the data decoder; and
a data reconstructing unit, configured to reconstruct the classified sub-images according to the reconstruction information to obtain multiple channels of video image data, and provide the obtained multiple channels of video image data for the multiple data output interfaces, wherein each channel of video image data is arranged according to a position of each channel of video image data in the panoramic video image data.

## Patentansprüche

1. Verfahren in Anwendung auf ein entferntes Panorama-Videokonferenzsystem zur Verarbeitung von Videobilddaten, umfassend:
Erhalten mehrerer Kanäle von korrelierenden Videobilddaten und korrelierenden Informationen durch ein Videokonferenzendgerät eines lokalen Konferenzorts, wobei die mehreren Kanäle von korrelierenden Videobilddaten durch mehrere Kameras erfasst werden, die an dem lokalen Konferenzort des entfernten Panorama-Videokonferenzsystems platziert sind, wobei die korrelierenden Informationen zwischen jedem Kanal von Videobilddaten einschließen: Informationen, die zur Angabe einer physikalischen Position von Videobilddaten verwendet werden, und erfasste Zeitstempelinformationen der Videobilddaten;
Kombinieren der mehreren Kanäle von korrelierenden Videobilddaten zu einem Einzelkanal von Panorama-Videobilddaten durch das Videokonferenzendgerät des lokalen Konferenzorts unter Verwendung der physikalischen Position und der Zeitstempelinformationen von jedem Kanal von Videobilddaten;
nach Rekombinieren der Panorama-Videobilddaten zu mehreren Kanälen von Videobilddaten, die eine Anzeigeanforderung gemäß der Anzahl der Anzeigevorrichtungen, eine Größe eines "Frames", der von jeder der Anzeigevorrichtungen unterstützt wird, und ein Format der Videobilddaten erfüllen, die von jeder der Anzeigevorrichtungen unterstützt werden, Senden der rekombinierten Videobilddaten an die Anzeigevorrichtungen eines entfernten Konferenzorts zur Anzeige;
wobei ein Prozess zum Rekombinieren der Panorama-Videobilddaten einen Partitionierungsprozess umfasst, und der Partitionierungsprozess umfasst:
Partitionieren des Panorama-Videobilds in mehrere Unterbilder durch das Videokonferenzendgerät des lokalen Konferenzorts und zwischenzeitliches Generieren von synchronen Informationen jedes Unterbilds durch das Videokonferenzendgerät des lokalen Konferenzorts;
Zuordnen von Rekonstruktionsinformationen für jedes Unterbild gemäß einer Partitionierungsmethode durch das Videokonferenzendgerät des lokalen Konferenzorts, wobei die Rekonstruktionsinformationen zum Aufzeichnen der Partitionierungsmethode jedes Unterbilds verwendet werden;
Verwenden mehrerer Kodierer zum simultanen Kodieren der partitionierten mehreren Kanäle von Unterbildern und der entsprechenden synchronen Informationen und Rekonstruktionsinformationen der partitionierten mehreren Kanäle von Unterbildern; und
Senden der mehreren Unterbilder und entsprechenden synchronen Informationen und Rekonstruktionsinformationen der mehreren Unterbilder zu einem Videokonferenzendgerät des entfernten Konferenzorts durch das Videokonferenzendgerät des lokalen Konferenzorts;
wobei das Verfahren ferner einen Synchronisationsprozess und einen Rekonstruktionsprozess umfasst, wobei der Synchronisationsprozess umfasst:
Empfangen der Unterbilder, der synchronen Informationen und der Rekonstruktionsinformationen durch das Videokonferenzendgerät des entfernten Konferenzorts; Verwenden mehrerer Dekoder zum simultanen Dekodieren der empfangenen und kodierten Informationen; und
Klassifizieren der Unterbilder gemäß den synchronen Informationen durch das Videokonferenzendgerät des entfernten Konferenzorts, wobei die Unterbilder, die zu demselben Panorama-Videobild gehören, zu derselben Kategorie gehören; und
der Rekonstruktionsprozess umfasst:
Rekonstruieren der klassifizierten Unterbilder gemäß den Rekonstruktionsinformationen durch das Videokonferenzendgerät des entfernten Konferenzorts, um mehrere Kanäle von Videobilddaten zu erhalten, wobei jeder Kanal von Videobilddaten gemäß einer Position jedes Kanals von Videobilddaten in den Panorama-Videobilddaten angeordnet ist.

2. Verfahren nach Anspruch 1, wobei die synchronen Informationen eine Sequenznummer oder ein Zeitstempel sind.

3. Verfahren nach Anspruch 1, wobei mehrere Teile der synchronen Informationen zur Generierung der mehreren Unterbilder insbesondere sind: Zeitstempel zum Zeitpunkt des Generierens der Panorama-Videobilddaten oder selbstdefinierte Sequenznummern, die generiert werden, wobei Sequenznummern von mehreren Unterbildern, die durch Partitionieren derselben Panorama-Videobilddaten erhalten werden, identisch sind.

4. Videokonferenzsystem, umfassend:
eine Dateneingabeschnittstelle, die zum Erhalten mehrerer Kanäle von korrelierenden Videobilddaten und korrelierenden Informationen konfiguriert ist, wobei die mehreren Kanäle von korrelierenden Videobilddaten durch mehrere Kameras erfasst werden, die an einem Konferenzort des entfernten Panorama-Videokonferenzsystems platziert sind, wobei die korrelierenden Informationen zwischen jedem Kanal von Videobilddaten Informationen, die zur Angabe einer physikalischen Position von Videobilddaten verwendet werden, und erfasste Zeitstempelinformationen der Videobilddaten einschließen;
eine Datenkombiniereinheit, die zum Verarbeiten der mehreren Kanäle von korrelierenden Videobilddaten zu einem Einzelkanal von Panorama-Videobilddaten unter Verwendung der physikalischen Position und der Zeitstempelinformationen von jedem Kanal von Videobilddaten konfiguriert ist;
eine Datenrekombiniereinheit, die zum Rekombinieren der Panorama-Videobilddaten zu mehreren Kanälen von Videobilddaten konfiguriert ist, welche eine Anzeigeanforderung erfüllen;
eine Datensendeeinheit, die zum Senden der kodierten mehreren Kanäle von Videobilddaten nach dem Kodieren über ein Kommunikationsnetzwerk konfiguriert ist, wobei die kodierten mehreren Kanäle von Videobilddaten durch die Datenrekombiniereinheit verarbeitet und erhalten werden;
eine Datenempfangseinheit, die zum Empfangen der mehreren Kanäle von Videobilddaten konfiguriert ist, die auf dem Kommunikationsnetzwerk getragen werden; mehrere Datenausgabeschnittstellen, die mit mehreren externen Anzeigevorrichtungen eines anderen Konferenzorts verbunden sind und konfiguriert sind, um jeweils jeden Kanal von dekodierten Videobilddaten nach dem Dekodieren an eine entsprechende Anzeigevorrichtung zu übertragen, wobei jeder Kanal von dekodierten Videobilddaten von der Datenempfangseinheit empfangen wird;
wobei jeder Kanal von Videobilddaten, die durch die Datenrekombiniereinheit rekombiniert und erhalten werden, umfasst: jedes Unterbild, das durch Rekombinieren des Panorama-Videobilds und synchroner Informationen und Rekonstruktionsinformationen, die jedem Unterbild entsprechen, erhalten wird, wobei die Rekonstruktionsinformationen zum Aufzeichnen der Partitionierungsmethode jedes Unterbilds verwendet werden;
die Anzahl der Datenkodierer und die Anzahl der Datendekodierer beide mehrfach ist, wobei die mehreren Datenkodierer simultan die mehreren Kanäle von Videobilddaten kodieren und die mehreren Datendekodierer simultan die mehreren Kanäle von Videobilddaten dekodieren;
das System ferner umfasst:
eine Datensynchronisiereinheit, die zum Klassifizieren der dekodierten Unterbilder gemäß entsprechenden synchronen Informationen der Unterbilder konfiguriert ist; und
eine Datenrekonstruktionseinheit, die zum Rekonstruieren der klassifizierten Unterbilder gemäß den Rekonstruktionsinformationen, um mehrere Kanäle von Videobilddaten zu erhalten, und Bereitstellen der erhaltenen Videobilddaten für die mehreren Datenausgabeschnittstellen konfiguriert ist, wobei jeder Kanal von Videobilddaten gemäß einer Position jedes Kanals von Videobilddaten in den Panorama-Videobilddaten angeordnet ist.

5. Videokonferenzendgerät, umfassend:
eine Dateneingabeschnittstelle, die zum Erhalten mehrerer Kanäle von korrelierenden Videobilddaten und korrelierenden Informationen konfiguriert ist, wobei die mehreren Kanäle von korrelierenden Videobilddaten durch mehrere Kameras erfasst werden, die an einem lokalen Konferenzort des entfernten Panorama-Videokonferenzsystems platziert sind, wobei die korrelierenden Informationen zwischen jedem Kanal von Videobilddaten einschließen: Informationen, die zur Angabe einer physikalischen Position von Videobilddaten verwendet werden, und erfasste Zeitstempelinformationen der Videobilddaten;
eine Datenkombiniereinheit, die zum Verarbeiten der mehreren Kanäle von korrelierenden Videobilddaten zu einem Einzelkanal von Panorama-Videobilddaten unter Verwendung der physikalischen Position und der Zeitstempelinformationen von jedem Kanal von Videobilddaten konfiguriert ist;
eine Datenrekombiniereinheit, die zum Rekombinieren der Panorama-Videobilddaten, die durch die Datenkombiniereinheit verarbeitet und erhalten werden, zu mehreren Kanälen von Videobilddaten konfiguriert ist, welche eine Anzeigeanforderung erfüllen;
eine Datenübermittlungseinheit, die zum Senden der mehreren Kanäle von Videobilddaten, welche durch die Datenrekombiniereinheit verarbeitet und erhalten werden, über ein Kommunikationsnetzwerk an eine entfernte Videokonferenzvorrichtung und zum Empfangen mehrerer Kanäle von rekombinierten Videobilddaten, die durch die Videokonferenzvorrichtung über das Kommunikationsnetzwerk gesendet werden, konfiguriert ist;
mehrere Datenausgabeschnittstellen, die mit mehreren externen Anzeigevorrichtungen verbunden und konfiguriert sind, um jeweils jeden Kanal von Videobilddaten, die durch die Datenübermittlungseinheit empfangen werden, an eine entsprechende Anzeigevorrichtung zu übertragen;
mehrere Datenkodierer, die zum simultanen Kodieren der mehreren Kanäle von Videobilddaten, die durch die Datenrekombiniereinheit rekombiniert und erhalten werden, und anschließendes Bereitstellen der kodierten Videobilddaten an die Datenübermittlungseinheit konfiguriert sind, wobei jeder Kanal von Videobilddaten jedes Unterbild, das durch Partitionieren des Panorama-Videobilds erhalten wird, und synchrone Informationen und Rekonstruktionsinformationen umfasst, die jedem Unterbild entsprechen, wobei die Rekonstruktionsinformationen zum Aufzeichen der Partitionierungsmethode jedes Unterbilds verwendet werden;
einen Datendekoder, der zum simultanen Dekodieren der mehreren Kanäle von Videobilddaten, die durch die Datenübermittelungseinheit empfangen werden, und anschließendes Bereitstellen der dekodierten Videobilddaten an eine Datensynchronisierungseinheit konfiguriert ist;
die Datensynchroniereinheit, die zum Klassifizieren der Unterbilder, die durch den Datendekoder dekodiert werden, gemäß entsprechenden synchronen Informationen der Unterbilder konfiguriert ist; und
eine Datenrekonstruktionseinheit, die zum Rekonstruieren der klassifizierten Unterbilder gemäß den Rekonstruktionsinformationen, um mehrere Kanäle von Videobilddaten zu erhalten, und Bereitstellen der erhaltenen mehreren Kanäle von Videobilddaten für die mehreren Datenausgabeschnittstellen konfiguriert ist, wobei jeder Kanal von Videobilddaten gemäß einer Position jedes Kanals von Videobilddaten in den Panorama-Videobilddaten angeordnet ist.

## Revendications

1. Procédé appliqué à un système de vidéoconférence panoramique distant permettant de traiter des données image vidéo, comprenant les étapes suivantes :
obtenir, par un terminal de vidéoconférence d'un site de conférence local, plusieurs canaux de données image vidéo corrélatives et des informations corrélatives, les multiples canaux de données image vidéo corrélatives étant collectés par plusieurs caméras placées au niveau du site de conférence local du système de vidéoconférence panoramique distant, les informations corrélatives entre chaque canal de données image vidéo comportant : des informations qui sont utilisées pour indiquer une position physique de données image vidéo, et des informations d'estampille temporelle capturées des données image vidéo ;
combiner, par le terminal de vidéoconférence du site de conférence local, les multiples canaux de données image vidéo corrélatives en un seul canal de données image vidéo panoramiques en utilisant la position physique et les informations d'estampille temporelle de chaque canal de données image vidéo ;
après avoir recombiné les données image vidéo panoramiques en plusieurs canaux de données image vidéo satisfaisant à une exigence d'affichage selon le nombre de dispositifs d'affichage, une taille d'une trame prise en charge par chacun des dispositifs d'affichage, et un format des données image vidéo pris en charge par chacun des dispositifs d'affichage, envoyer les données image vidéo recombinées aux dispositifs d'affichage d'un site de conférence distant pour un affichage ;
un processus consistant à recombiner les données image vidéo panoramiques comprenant : un processus de partitionnement, et le processus de partitionnement comprenant les étapes suivantes :
partitionner, par le terminal de vidéoconférence du site de conférence local, les images vidéo panoramiques en plusieurs sous-images, et entre-temps générer, par le terminal de vidéoconférence du site de conférence local, des informations synchrones de chaque sous-image ;
affecter, par le terminal de vidéoconférence du site de conférence local, des informations de reconstruction pour chaque sous-image selon un mode de partitionnement, les informations de reconstruction étant utilisées pour enregistrer le mode de partitionnement de chaque sous-image ;
utiliser plusieurs codeurs pour coder simultanément les multiples canaux partitionnés de sous-images et les informations synchrones correspondantes et des informations de reconstruction des multiples canaux partitionnés de sous-images ; et
envoyer, par le terminal de vidéoconférence du site de conférence local, les multiples sous-images et des informations synchrones correspondantes et des informations de reconstruction des multiples sous-images à un terminal de vidéoconférence du site de conférence distant ;
le procédé comprenant en outre un processus de synchronisation et un processus de reconstruction, le processus de synchronisation comprenant les étapes suivantes :
recevoir, par le terminal de vidéoconférence du site de conférence distant, les sous-images, les informations synchrones, et les informations de reconstruction ;
utiliser plusieurs décodeurs pour décoder simultanément les informations reçues et codées ; et
classifier, par le terminal de vidéoconférence du site de conférence distant, les sous-images selon les informations synchrones, les sous-images qui appartiennent à la même image vidéo panoramique appartenant à la même catégorie ; et
le processus de reconstruction comprenant :
reconstruire, par le terminal de vidéoconférence du site de conférence distant, les sous-images classifiées selon les informations de reconstruction pour obtenir plusieurs canaux de données image vidéo, chaque canal de données image vidéo étant placé selon une position de chaque canal de données image vidéo dans les données image vidéo panoramiques.

2. Procédé selon la revendication 1, dans lequel les informations synchrones sont un numéro de séquence ou une estampille temporelle.

3. Procédé selon la revendication 1, dans lequel plusieurs informations synchrones permettant de générer les multiples sous-images sont spécifiquement : des estampilles temporelles au moment de générer les données image vidéo panoramiques, ou des numéros de séquence auto-définis qui sont générés, des numéros de séquence de plusieurs sous-images obtenues en partitionnant les mêmes données image vidéo panoramiques étant identiques.

4. Système de vidéoconférence, comprenant :
une interface d'entrée de données, configurée pour obtenir plusieurs canaux de données image vidéo corrélatives et des informations corrélatives, les multiples canaux de données image vidéo corrélatives étant collectés par plusieurs caméras placées au niveau d'un site de conférence du système de vidéoconférence panoramique distant, les informations corrélatives entre chaque canal de données image vidéo comportant : des informations qui sont utilisées pour indiquer une position physique de données image vidéo, et des informations d'estampille temporelle capturées des données image vidéo ;
une unité de combinaison de données, configurée pour traiter les multiples canaux de données image vidéo corrélatives en un seul canal de données image vidéo panoramiques en utilisant la position physique et les informations d'estampille temporelle de chaque canal de données image vidéo ;
une unité de recombinaison de données, configurée pour recombiner les données image vidéo panoramiques en plusieurs canaux de données image vidéo satisfaisant à une exigence d'affichage ;
une unité d'envoi de données, configurée pour envoyer, par l'intermédiaire d'un réseau de communication, les multiples canaux codés de données image vidéo après un encodage, les multiples canaux codés de données image vidéo étant traités et obtenus par l'unité de recombinaison de données ;
une unité de réception de données, configurée pour recevoir les multiples canaux de données image vidéo qui sont transportées sur le réseau de communication ;
plusieurs interfaces de sortie de données, connectées à plusieurs dispositifs d'affichage externes d'un autre site de conférence, et configurées pour transmettre respectivement chaque canal de données image vidéo décodées après un décodage à un dispositif d'affichage correspondant, chaque canal de données image vidéo décodées étant reçu par l'unité de réception de données ;
chaque canal de données image vidéo recombinées et obtenues par l'unité de recombinaison de données comprenant : chaque sous-image obtenue en recombinant l'image vidéo panoramique, et des informations synchrones et des informations de reconstruction qui correspondent à chaque sous-image, les informations de reconstruction étant utilisées pour enregistrer le mode de partitionnement de chaque sous-image ;
le nombre de codeurs de données et le nombre de décodeurs de données étant tous deux multiples, les multiples codeurs de données codant simultanément les multiples canaux de données image vidéo, et les multiples décodeurs de données décodant simultanément les multiples canaux de données image vidéo ;
le système comprenant en outre :
une unité de synchronisation de données, configurée pour classifier les sous-images décodées selon des informations synchrones correspondantes des sous-images ; et
une unité de reconstruction de données, configurée pour reconstruire les sous-images classifiées selon les informations de reconstruction pour obtenir plusieurs canaux de données image vidéo, et fournir les données image vidéo obtenues pour les multiples interfaces de sortie de données, chaque canal de données image vidéo étant placé selon une position de chaque canal de données image vidéo dans les données image vidéo panoramiques.

5. Terminal de vidéoconférence, comprenant :
une interface d'entrée de données, configurée pour obtenir plusieurs canaux de données image vidéo corrélatives et des informations corrélatives, les multiples canaux de données image vidéo corrélatives étant collectés par plusieurs caméras placées au niveau d'un site de conférence local du système de vidéoconférence panoramique distant, les informations corrélatives entre chaque canal de données image vidéo comportant : des informations qui sont utilisées pour indiquer une position physique de données image vidéo, et des informations d'estampille temporelle capturées des données image vidéo ;
une unité de combinaison de données, configurée pour traiter les multiples canaux de données image vidéo corrélatives en un seul canal de données image vidéo panoramiques en utilisant la position physique et les informations d'estampille temporelle de chaque canal de données image vidéo ;
une unité de recombinaison de données, configurée pour recombiner les données image vidéo panoramiques traitées et obtenues par l'unité de combinaison de données en plusieurs canaux de données image vidéo satisfaisant à une exigence d'affichage ;
une unité d'émission/réception de données, configurée pour envoyer, par l'intermédiaire d'un réseau de communication, les multiples canaux de données image vidéo traitées et obtenues par l'unité de recombinaison de données à un dispositif de vidéoconférence distant, et recevoir plusieurs canaux de données image vidéo recombinées envoyées par le dispositif de vidéoconférence par l'intermédiaire du réseau de communication ;
plusieurs interfaces de sortie de données, connectées à plusieurs dispositifs d'affichage externes, et configurées pour transmettre respectivement chaque canal de données image vidéo reçues par l'unité d'émission/réception de données à un dispositif d'affichage correspondant ;
plusieurs codeurs de données, configurés pour coder simultanément les multiples canaux de données image vidéo recombinées et obtenues par l'unité de recombinaison de données, puis fournir les données image vidéo codées à l'unité d'émission/réception de données, chaque canal de données image vidéo comprenant chaque sous-image obtenue en partitionnant l'image vidéo panoramique, et des informations synchrones et des informations de reconstruction qui correspondent à chaque sous-image, les informations de reconstruction étant utilisées pour enregistrer le mode de partitionnement de chaque sous-image ;
un décodeur de données, configuré pour décoder simultanément les multiples canaux de données image vidéo reçues par l'unité d'émission/réception de données, puis fournir les données image vidéo décodées à une unité de synchronisation de données ;
l'unité de synchronisation de données, configurée pour classifier, selon des informations synchrones correspondantes des sous-images, les sous-images décodées par le décodeur de données ; et
une unité de reconstruction de données, configurée pour reconstruire les sous-images classifiées selon les informations de reconstruction pour obtenir plusieurs canaux de données image vidéo, et fournir les multiples canaux obtenus de données image vidéo pour les multiples interfaces de sortie de données, chaque canal de données image vidéo étant placé selon une position de chaque canal de données image vidéo dans les données image vidéo panoramiques.
